(19)

Europäisches Patentamt

European Patent Office

Office européen des brevets

(11) **EP 4 633 227 A1**

(12) **EUROPEAN PATENT APPLICATION**
published in accordance with Art. 153(4) EPC

(43) Date of publication:
**15.10.2025 Bulletin 2025/42**

(21) Application number: **24760525.6**

(22) Date of filing: **16.02.2024**

(51) International Patent Classification (IPC):
**H04W 24/08** (2009.01)   **H04L 5/00** (2006.01)

(52) Cooperative Patent Classification (CPC):
**H04L 5/00; H04W 24/08**

(86) International application number:
**PCT/KR2024/002131**

(87) International publication number:
**WO 2024/177335 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.02.2023   KR 20230025431**

(71) Applicants:
• **Hyundai Motor Company**
  **Seoul 06797 (KR)**
• **Kia Corporation**
  **Seoul 06797 (KR)**
• **Seoul National University R&DB Foundation**
  **Seoul 08826 (KR)**

(72) Inventors:
• **LEE, Jeong Su**
  **Hwaseong-si, Gyeonggi-do 18280 (KR)**
• **HAHN, Gene Back**
  **Hwaseong-si, Gyeonggi-do 18280 (KR)**
• **HONG, Ui Hyun**
  **Hwaseong-si, Gyeonggi-do 18280 (KR)**
• **SUH, Young Kil**
  **Hwaseong-si, Gyeonggi-do 18280 (KR)**
• **CHOI, Wan**
  **Seoul 08826 (KR)**
• **KIM, Bum Jun**
  **Seoul 08826 (KR)**
• **KWON, Jeonghyeon**
  **Seoul 08826 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND APPARATUS FOR DETERMINING ELECTROMAGNETIC WAVE AREA IN WIRELESS COMMUNICATION ENVIRONMENT**

(57)    The present invention relates to a technology for determining an electromagnetic wave area in a wireless communication environment and may provide a method of a base station, wherein the method of the base station may comprise the steps of: obtaining at least one phase difference generated in at least two transmission paths between the base station and a terminal; determining whether the at least one phase difference satisfies a far-field assumption; and determining an electromagnetic wave area on the basis of whether the far-field assumption is satisfied.

【FIG. 10】

EP 4 633 227 A1

**Description**

[Technical Field]

The present disclosure relates to an enhanced communication technique, and more particularly, to a technique for classifying an electromagnetic wave region into a near-field and a far-field and adjusting a reception beam direction accordingly in a wireless communication environment.

[Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyperspace, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in future 6G terahertz communication, a procedure for determining whether a wireless channel environment corresponds to a near-field or a far-field, and a definition of parameters related thereto, may be required in order for a base station and a user equipment (UE) to perform communication suitable for each electromagnetic wave region.

[Disclosure]

[Technical Problem]

The present disclosure is directed to providing a method and an apparatus for classifying an electromagnetic wave region into a near-field and a far-field and adjusting a reception beam direction accordingly in a wireless communication environment.

[Technical Solution]

According to a first exemplary embodiment of the present disclosure, a method for determining an electromagnetic wave region in a wireless communication environment, performed by a base station, may comprise: acquiring at least one phase difference occurring on at least two transmission paths between the base station and a user equipment (UE); determining whether the at least one phase difference satisfies a far-field assumption; and determining an electromagnetic wave region based on whether the far-field assumption is satisfied.

The acquiring of the at least one phase difference occurring on the at least two transmission paths may comprise: transmitting at least two reference signals to the UE; receiving at least two phases measured for the at least two reference signals from the UE; and acquiring the at least one phase difference based on the at least two phases.

The at least two reference signals may be at least two reference signals capable of phase measurement.

The at least two reference signals may be transmitted using a center antenna and at least one edge antenna of the base station.

The far-field assumption may be a condition in which the at least one phase difference is equal to or less than a threshold phase, and the determining of the electromagnetic wave region based on whether the far-field assumption is satisfied may comprise: in response to the at least one phase difference being equal to or less than the threshold phase, determining that the electromagnetic wave region is in a far-field; and in response to the at least one phase difference being greater than the threshold phase, determining that the electromagnetic wave region is in a near-field.

The acquiring of the at least one phase difference occurring on the at least two transmission paths may comprise: receiving a reference signal from the terminal using at least two antennas; calculating a delay spread for the reference signal received using each of the at least two antennas; and converting the calculated delay spreads into corresponding phase difference(s) to acquire the at least one phase difference.

The method may further comprise: transmitting a result of determining the electromagnetic wave region to the terminal.

According to a second exemplary embodiment of the present disclosure, a method for determining an electromagnetic wave region in a wireless communication environment, performed by a user equipment (UE), may comprise: receiving at least two reference signals from a base station; measuring at least two phases for the at least two reference signals; and transmitting the measured at least two phases to the base station, wherein the measured at least two phases are used to determine whether the UE is located in a near-field or a far-field.

The at least two reference signals may be at least two reference signals capable of phase measurement.

The method may further comprise: receiving a determination result for an electromagnetic wave region from the base station; and adjusting a reception beam according to the determination result, wherein the determination result indicates whether the electromagnetic wave region is in the near-field or the far-field.

According to a third exemplary embodiment of the present disclosure, an apparatus for determining an electromagnetic wave region in a wireless communication environment, implemented as a user equipment (UE), may comprise: a processor, wherein the processor may cause the UE to perform: receiving at least two reference signals from a base station; measuring at least two phases for the at least two reference signals; and transmitting the measured at least two phases to the base station, wherein the measured at least two phases are used to determine whether the UE is located in a near-field or a far-field.

The at least two reference signals may be at least two reference signals capable of phase measurement.

The processor may further cause the UE to perform: receiving a determination result for an electromagnetic wave region from the base station; and adjusting a reception beam according to the determination result, wherein the determination result indicates whether the electromagnetic wave region is in the near-field or the far-field.

[Advantageous Effects]

According to the present disclosure, a base station and a terminal may classify an electromagnetic wave region into a near-field or a far-field by using a phase difference between transmission paths between the base station and the terminal. In addition, according to the present disclosure, the base station and the terminal may classify an electromagnetic wave region into a near-field or a far-field by using a Rayleigh distance. Furthermore, according to the present disclosure, the base station and the terminal may classify an electromagnetic wave region into a near-field or a far-field by using RSRPPs of reference signals.

[Description of Drawings]

FIG. 1 is a conceptual diagram illustrating a first exemplary embodiment of a communication system.

FIG. 2 is a block diagram illustrating a first exemplary embodiment of a communication node constituting a communication system.

FIG. 3 is a block diagram illustrating a first exemplary embodiment of communication nodes performing communication.

FIG. 4A is a block diagram illustrating a first exemplary embodiment of a transmission path.

FIG. 4B is a block diagram illustrating a first exemplary embodiment of a reception path.

FIG. 5 is a conceptual diagram illustrating a first exemplary embodiment of a system frame in a communication system.

FIG. 6 is a conceptual diagram illustrating a first exemplary embodiment of a subframe in a communication system.

FIG. 7 is a conceptual diagram illustrating a first exemplary embodiment of a slot in a communication system.

FIG. 8 is a conceptual diagram illustrating a first exemplary embodiment of a time-frequency resource in a communication system.

FIG. 9 is a conceptual diagram illustrating a first exemplary embodiment of electromagnetic wave region classification based on the Rayleigh distance.

FIG. 10 is a flowchart illustrating a first exemplary embodiment of an electromagnetic wave region determination method in a wireless communication environment.

FIG. 11 is a conceptual diagram illustrating a first exemplary embodiment of a uniform linear array (ULA) antenna.

FIG. 12 is a conceptual diagram illustrating a first exemplary embodiment of a uniform planar array (UPA) antenna.

FIG. 13 is a conceptual diagram illustrating a first exemplary embodiment of antenna indexes.

FIG. 14 is a flowchart illustrating a second exemplary embodiment of a method for determining an electromagnetic wave region in a wireless communication environment.

FIG. 15 is a conceptual diagram illustrating a first exemplary embodiment of an antenna size of a ULA.

FIG. 16 is a conceptual diagram illustrating a first exemplary embodiment of an antenna size of a UPA.

FIG. 17 is a flowchart illustrating a third exemplary embodiment of a method for determining an electromagnetic wave region in a wireless communication environment.

FIG. 18 is a flowchart illustrating a fourth exemplary embodiment of a method for determining an electromagnetic wave region in a wireless communication environment.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

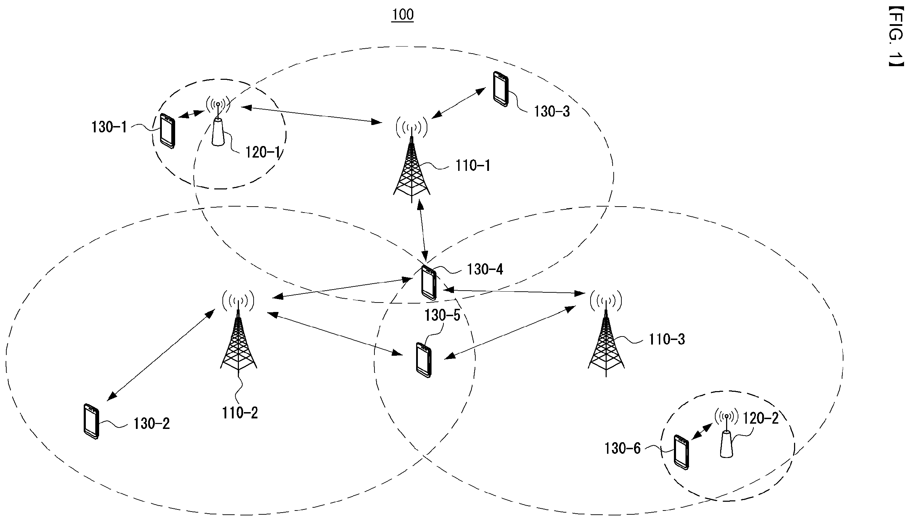

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g. a serving gateway (S-GW), a packet data network (PDN) gateway (P-GW), a mobility management entity (MME). When the communication system 100 is a 5G communication (e.g. NR system), the core network may include an access and mobility management function (AMF), a user plane function (UPF), a session management function (SMF), and the like.

The plurality of communication nodes 110 to 130 may support communication protocols (e.g. LTE communication protocol, LTE-A communication protocol, NR communication protocol, etc.) specified in 3rd generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

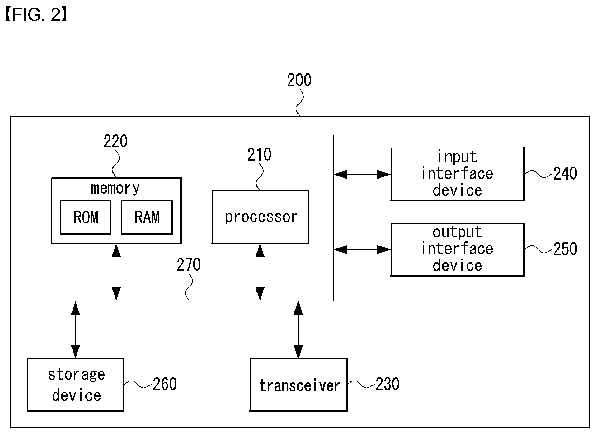

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g. device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

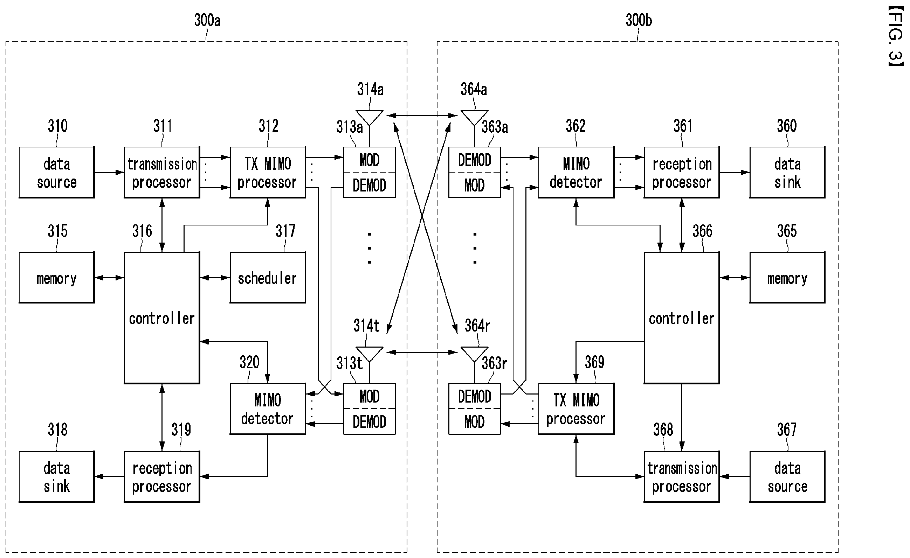

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g. data unit) from a data source 310. The transmission processor 311 may receive control information from a controller 316. The control information may include at least one of system information, RRC configuration information (e.g. information configured by RRC signaling), MAC control information (e.g. MAC CE), or PHY control information (e.g. DCI, SCI).

The transmission processor 311 may generate data symbol(s) by performing processing operations (e.g. encoding operation, symbol mapping operation, etc.) on the data. The transmission processor 311 may generate control symbol(s) by performing processing operations (e.g. encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g. precoding operations) on the data symbol(s), control symbol(s), and/or synchronization/reference symbol(s). An output (e.g. symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g. de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g. data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g. precoding operations) on the data symbol(s), control symbol(s), and/or reference symbol(s). An output (e.g. symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g. de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

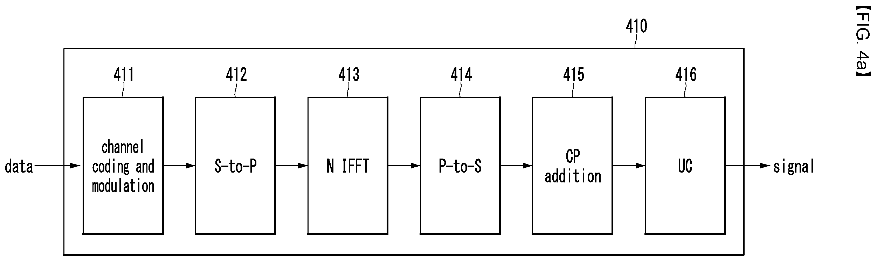

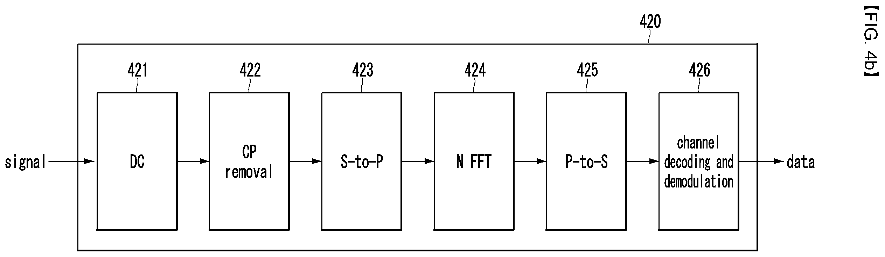

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-toP) block 412, an N-point inverse fast Fourier transform (N-point IFFT) block 413, a parallel-to-serial (P-to-S) block 414, a cyclic prefix (CP) addition block 415, and upconverter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g. components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

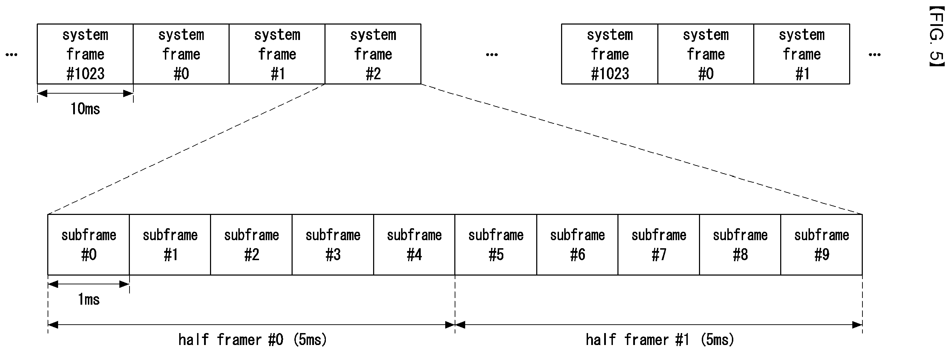

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

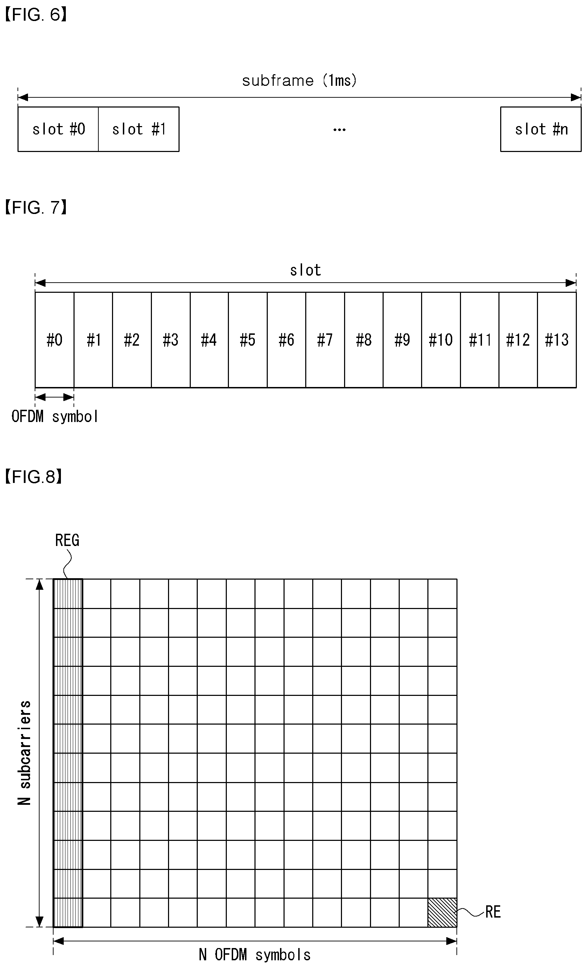

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

[Table 1]

| Subcarrier spacing | 15 kHz | 30 kHz | 60 kHz | 120 kHz | 240 kHz | 480 kHz |
|---|---|---|---|---|---|---|
| OFDM symbol length [$\mu$s] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g. $\mu = 0$), the length of slot may be 1 ms. In this case, one system frame may include 10 slots. When a subcarrier spacing is 30 kHz (e.g. $\mu = 1$), the length of slot may be 0.5 ms. In this case, one system frame may include 20 slots.

When a subcarrier spacing is 60 kHz (e.g. $\mu = 2$), the length of slot may be 0.25 ms. In this case, one system frame may include 40 slots. When a subcarrier spacing is 120 kHz (e.g. $\mu = 3$), the length of slot may be 0.125 ms. In this case, one system frame may include 80 slots. When a subcarrier spacing is 240 kHz (e.g. $\mu = 4$), the length of slot may be 0.0625 ms. In this case, one system frame may include 160 slots.

**EP 4 633 227 A1**

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured via higher-layer signaling (e.g. RRC signaling). Information indicating a semi-static slot format may be included in system information, and the semi-static slot format may be configured cell-specifically. Additionally, a semi-static slot format may be further configured for each terminal via terminal-specific higher-layer signaling (e.g. RRC signaling). Flexible symbols in the cell-specific slot format may be overridden to be downlink symbols or uplink symbols via terminal-specific higher-layer signaling. Furthermore, a slot format may be dynamically indicated via physical layer signaling (e.g. slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g. a common RB grid) based on a reference frequency (e.g. point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, in the third-generation Universal Mobile Telecommunication System (UMTS) and fourth-generation Long Term Evolution (LTE) communications, over-the-air (OTA) tests may be performed to obtain a measurement value for total radiated power (TRP), which is the maximum output power emitted from a wireless device, or total isotropic sensitivity (TIS), which is a reception sensitivity of the wireless device. In this regard, the fifth-generation communication has introduced a millimeter wave frequency band. Due to this, in the 5G NR communication, the OTA tests may be performed to measure communication performance in a wireless communication environment. In other words, in the 5G NR communication, the OTA tests may be performed not only to obtain TRP and TIS measurement values but also to measure communication performance in most wireless communication environments. Here, the measurement of communication performance may include performance verification of a protocol.

In a millimeter wave frequency band, path loss may appear significantly. Therefore, the 5G communication may require techniques utilizing multiple antennas, such as massive multiple input multiple output (MIMO), to compensate for such path loss. In this case, a wireless device may need to secure additional space to install the multiple antennas. Accordingly, in the 5G NR communication, physical and spatial costs may be required more for communication through a frequency range (FR) 2 band (i.e. millimeter wave frequency band) compared to an FR1 band. As a result, a procedure to check in advance whether the current communication environment satisfies the requirements of wireless communication through the OTA tests may be important. Consequently, the scope of performing OTA tests may be expanded.

The 5G NR specifications, such as technical reports (TRs) 37.977 and 38.827, address wireless channel environments, performance targets for verification, and measurement procedures necessary for evaluating communication performance under wireless channel conditions. In addition, the current specifications consider OTA testing in a far-field. The contribution R5-180013, proposed at the technical specification group-radio access network (TSG-RAN) working group 5 (WG5) Adhoc Meeting #1, defines in tabular form a Rayleigh distance (i.e. Fraunhofer distance), which represents a boundary between a near-field and a far-field for a specific antenna array size and communication frequency, in order to ensure far-field operations.

The 5G NR specifications may currently require that the distance between a transmitting end and a receiving end be greater than the Rayleigh distance, based on a table or a mathematical expression representing the Rayleigh distance for a given antenna array size and frequency. As a result, it may be possible to guarantee that the OTA test environment is a far-field environment. However, in a 6G terahertz communication environment, the Rayleigh distance may increase due to the use of a greater number of antennas and higher frequency bands, and thus, situations may exist where the environment falls within the near-field even at typical communication distances. Accordingly, beyond simply guaranteeing that the OTA test environment is in the far-field as is currently done, a process of determining an electromagnetic wave region based on given information in an actual communication environment and performing appropriate communication accordingly may be important. Therefore, in future 6G terahertz communication, a procedure to determine whether the communication is in the near-field or the far-field according to elements of a given wireless channel environment, and definitions of parameters related thereto, may be required for a base station and a terminal to perform communication suitable for each electromagnetic wave region.

Meanwhile, an electromagnetic wave region may be classified into a near-field (i.e. Fresnel region) and a far-field (i.e. Fraunhofer region). A boundary between the two regions, denoted as a distance R, may be expressed as in Equation 1 below with respect to a maximum allowable phase error $\Phi$. Here, D may be the maximum size of the antenna, and $\lambda$ may be a wavelength.

[Equation 1]

$$R = \pi D^2 / 4\Phi\lambda$$

Here, the maximum allowable phase error may refer to a maximum phase difference between two different antennas in a given antenna array. An equation related to electromagnetic waves in the far-field, namely, the Fraunhofer approximation (i.e. far-field diffraction equation), may not hold when the maximum allowable phase error exceeds $\pi/8$. Accordingly, electromagnetic waves may be difficult to approximate and model in form of planar waves as assumed in conventional communication systems.

As a result, a phase of an electromagnetic wave observed at each antenna may not be represented as a linear function of an antenna index. Consequently, the phase observed at the antenna may be expressed as a nonlinear function reflecting an antenna index, angle of arrival, and distance between the base station and the terminal. Therefore, a beamforming technique used in the far-field region may not be directly applicable to the near-field region. Accordingly, in the near-field region, it may be difficult to use conventional communication techniques as they are. Here, the conventional communication techniques may include communication techniques using initial access, beam management, and resource allocation.

Meanwhile, the maximum allowable phase error $\Phi$ may be $\pi/8$. In such a case, the boundary distance R between the electromagnetic wave regions may be used as a far-field criterion as shown in Equation 2. Here, the maximum allowable phase error may be a threshold phase.

[Equation 2]

$$R = 2D^2/\lambda$$

Here, the boundary distance R between the electromagnetic wave regions may be defined to ensure that the phase difference between different antennas does not exceed $\pi/8$ for a signal received from an object located at a distance of $2D^2/\lambda$ or greater. Accordingly, electromagnetic waves may be approximated under the planar wave assumption.

Currently, technical specifications may guarantee the performance of OTA testing in the far-field by performing the OTA tests at a distance farther than the Rayleigh distance for a specific antenna size and frequency. However, in a 6G terahertz environment, the Rayleigh distance may decrease due to the use of a greater number of antennas and higher frequency bands. Accordingly, situations in which the near-field applies may exist even at typical communication distances. When performing 6G terahertz communication, a determination may be made as to whether the current communication environment is in the near-field or the far-field according to the given communication environment (e.g. antenna size, frequency, distance between the base station and the terminal, channel environment, and so on), and communication suitable for the determined region may be performed.

The 5G NR technical specifications specify measurement methodologies in Clause 6 of TR 38.827 for determining the electromagnetic wave region in a wireless communication environment. They also specify downlink measurement methodologies in Clause 6.3 of TR 37.977, among the candidate methodologies described in Clause 6. Accordingly, the 5G NR specifications specify requirements for multi-probe anechoic chamber (MPAC) and radiated two stage (RTS) setups for FR1, and three-dimensional (3D) MPAC for FR2, as required measurement environments for verifying communication performance in wireless channel conditions. The 5G NR specifications also address the performances to be verified (e.g. throughput, total radiated power (TRP), total radiated sensitivity (TRS), channel quality indicator (CQI), block error rate (BLER), antenna efficiency, mean effective gain (MEG), antenna correlation, and MIMO channel capacity), along with the corresponding measurement procedures.

In addition, the contribution R5-180013, proposed at the TSG-RAN WG5 Adhoc Meeting #1 defines, in a tabular form, the Rayleigh distance (i.e. Fraunhofer distance), which represents a boundary between the near-field and the far-field for a given antenna array size and communication frequency, in order to ensure the far-field operations. As such, the current 5G NR specifications may not take the channel environment into account when determining whether a region is in the near-field or far-field, and may only provide examples, in form of a table, where the distances are calculated according to hardware specifications of the base station and the terminal. Furthermore, the current 5G NR specifications may not define a procedure for determining whether the current communication environment falls within the near-field or far-field, nor for performing communication accordingly. Therefore, in order for the base station and the terminal to perform communication, a procedure for determining whether the current channel environment falls within the far-field or near-field, and a definition of parameters required for that procedure, may be necessary.

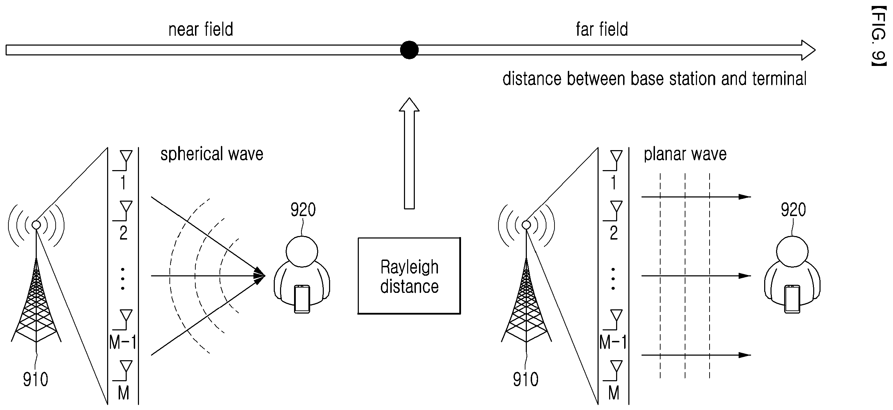

FIG. 9 is a conceptual diagram illustrating a first exemplary embodiment of electromagnetic wave region classification based on the Rayleigh distance.

As shown in FIG. 9, according to a Rayleigh distance-based electromagnetic wave region classification scheme, an electromagnetic wave region between a transmitter and a receiver may be classified into a near-field and a far-field. Here, the near-field may refer to a region in which a distance between a base station 910 and a terminal 920 is shorter than the Rayleigh distance. In such a near-field, electromagnetic waveforms of signals exchanged between the base station and the terminal may be approximated and modeled as spherical waves.

Next, the far-field may refer to a region in which the distance between the base station and the terminal is greater than the Rayleigh distance. In such a far-field, electromagnetic waveforms of signals exchanged between the base station and the terminal may be approximated and modeled as planar waves.

Here, FIG. 9 may illustrate the classification of the electromagnetic wave region based on the distance between the base station and the terminal, assuming fixed antenna array sizes thereof and communication frequency. Additionally, FIG. 9 may represent a downlink environment where the base station transmits a signal to the terminal. However, the scheme of FIG. 9 may also allow classification of the near-field and the far-field in an uplink environment based on the same criterion.

Meanwhile, in the far-field, electromagnetic waves may be modeled as planar waves. Therefore, from the perspective of the base station, a phase of an electromagnetic wave observed at each antenna may be expressed as a linear function of an antenna index. However, in the near-field, electromagnetic waves may not be approximated and modeled as planar waves. Therefore, a phase of an electromagnetic wave observed at each antenna may not be expressed as a linear function of an antenna index.

On the other hand, the phase observed at the antenna may be expressed as a nonlinear function that reflects the antenna index, angle of incidence, and the distance between the base station and the terminal. Therefore, in the near-field, the base station may not be able to use beamforming techniques that are available in the far-field as they are. In addition, in the near-field, the base station may not be able to apply conventional communication techniques such as initial access, beam management, and resource allocation as they are. Consequently, in a 6G terahertz communication environment, the base station and the terminal may determine whether the current wireless communication environment is in the near-field or far-field before performing communication. Then, the base station and the terminal may perform communication in accordance with the corresponding electromagnetic wave region.

The present disclosure proposes techniques for determining an electromagnetic wave region before performing communication suitable for the near-field or far-field. Specifically, the present disclosure proposes a phase difference-based electromagnetic wave region determination technique, a Rayleigh distance-based electromagnetic wave region determination technique, and a reference signal received path power (RSRPP)-based electromagnetic wave region determination technique. The base station and the terminal may independently utilize each technique. Alternatively, the base station and the terminal may combine two or more determination techniques and determine that the current region is in the near-field or far-field when multiple conditions are satisfied simultaneously.

Meanwhile, the present disclosure aims to propose a specific procedure required to determine an electromagnetic wave region and parameters required therefor before the base station and the terminal perform wireless communication. Additionally, the present disclosure aims to propose a phase difference-based electromagnetic wave region determination technique, a Rayleigh distance-based electromagnetic wave region determination technique, and an RSRPP-based electromagnetic wave region determination technique.

The first electromagnetic wave region determination technique based on phase difference may include a process of verifying whether a phase difference between two different antennas satisfies the Fraunhofer approximation, which is the far-field assumption. Theoretically, if a phase difference of electromagnetic waves measured at two different antennas exceeds the threshold phase (e.g. $\pi/8$), the planar wave assumption may not hold. Therefore, the phase difference-based electromagnetic wave region determination technique may include a process of determining that the region is in the near-field when the phase difference of phases measured at two different antennas exceeds the threshold phase (e.g. $\pi/8$). On the other hand, the phase difference-based electromagnetic wave region determination technique may include a process of determining that the region is in the far-field when the phase difference of phases measured at two different antennas does not exceed the threshold phase (e.g. $\pi/8$).

In the phase difference-based electromagnetic wave region determination method, the theoretical value of $\pi/8$ may not be directly used as the threshold for electromagnetic wave region determination, and a value that results in practically higher communication performance than when the region is determined using $\pi/8$ may be set and used in consideration of the current communication environment.

The second electromagnetic wave region determination method based on Rayleigh distance may include a process of determining an electromagnetic wave region by comparing the Rayleigh distance, which is theoretically used as a criterion to distinguish between the near-field and the far-field, with the currently measured distance between the base station and the terminal. The Rayleigh distance-based electromagnetic wave region determination technique may include a process of calculating the Rayleigh distance according to the antenna array sizes of the base station and the terminal and the frequency used for communication. The Rayleigh distance-based electromagnetic wave region determination technique may also include a process of comparing the calculated Rayleigh distance with the measured distance between the base station and the terminal. In addition, the Rayleigh distance-based electromagnetic wave region determination technique may include a process of determining that the region is in the far-field when the measured distance between the base station and the terminal is greater than the Rayleigh distance. Conversely, the Rayleigh distance-based electromagnetic wave region determination technique may include a process of determining that the region is in the near-field when the measured distance between the base station and the terminal is not greater than the Rayleigh distance.

The last electromagnetic wave region determination method based on RSRPP may include a process in which the base station transmits a reference signal by using a far-field beamforming vector corresponding to a location of the terminal. Furthermore, the RSRPP-based electromagnetic wave region determination technique may include a process of determining whether the region is in the near-field or far-field by comparing an RSRPP measurement value of the reference signal with a newly defined parameter (e.g. field distinction RSRPP threshold). Specifically, the RSRPP-based electromagnetic wave region determination technique may determine the region as the far-field when the RSRPP measurement value exceeds the field distinction RSRPP threshold. In this case, the RSRPP-based electromagnetic wave region determination technique may determine the region as the near-field when the RSRPP measurement value does not exceed the field distinction RSRPP threshold. Unlike the aforementioned methods, the RSRPP-based electromagnetic wave region determination technique may include a process in which the base station performs transmissions using far-field beamforming vectors through beam sweeping. The RSRPP-based electromagnetic wave region determination technique may include a process of determining the region to be in the near-field when the RSRPP measurement does not exhibit a peak at any specific angle and the RSRPP values remain relatively low and uniform across a wide angular range. In this case, the RSRPP-based electromagnetic wave region determination technique may include a process of determining the region to be in the far-field when the RSRPP values show a peak at a specific angle.

Meanwhile, the Rayleigh distance-based electromagnetic wave region determination technique proposed in the present disclosure may be absolutely dependent on the accuracy of the distance measurement between the base station and the terminal and the calculation accuracy of the Rayleigh distance. As a result, a determination result in the above-described method may be changed due to errors caused by obstacles or the like. In addition, the RSRPP-based electromagnetic wave region determination technique may include uncertainty caused by the inability to accurately identify the location of the terminal.

Accordingly, the present disclosure proposes a method for determining which techniques to use, based on information provided to the base station (e.g. phase observed at each antenna, measured distance between the base station and the terminal, RSRPP, etc.) and the current communication environment (e.g. channel characteristics, latency requirement of the terminal, etc.). The present disclosure also proposes a method for determining which technique to use to perform electromagnetic wave region determination.

Meanwhile, the RSRPP-based electromagnetic wave region determination technique may be a technique that determines an electromagnetic wave region based on a tendency of the RSRPP. Therefore, when the tendency is not clearly observed, the RSRPP-based electromagnetic wave region determination technique may have lower accuracy compared to other techniques. In contrast, the phase difference-based electromagnetic wave region determination technique may provide more accurate determination of an electromagnetic wave region than other techniques because it is clearly established that the Fraunhofer approximation holds when the phase difference between all antenna pairs does not exceed $\pi/8$. However, the measurement of phase differences between all antenna pairs may require transmission of reference signals (RS) capable of phase measurement in proportion to the number of antennas subject to the phase measurement. Therefore, the RSRPP-based electromagnetic wave region determination technique may require more time for performing electromagnetic wave region determination.

Meanwhile, after the electromagnetic wave region is determined, the corresponding information may be used in an initial access procedure or handover procedure, for example, for re-access due to a radio link failure (RLF) and dual connectivity. In addition, after the electromagnetic wave region is determined, the corresponding information may be used to exclude candidate antennas in a joint beamforming operation in a multi-TRP (mTRP) environment. Alternatively, after the electromagnetic wave region is determined, the corresponding information may be used so that the terminal does not access a base station in the near-field and instead accesses a base station in the far-field. Alternatively, after the electromagnetic wave region is determined, the corresponding information may be used to form a beam suitable for each electromagnetic wave region during beamforming. From the perspective of mobility, the communication environment with the terminal may change from the near-field to the far-field or from the far-field to the near-field. When the communication environment changes in this manner, the application of a communication technique suitable for the communication environment may be required. In addition, a procedure for determining the electromagnetic wave region according to each situation may be required. Therefore, after the electromagnetic wave region is determined, the corresponding information may also be used for event-triggering by the terminal.

**Phase difference-based electromagnetic wave region determination technique**

An electromagnetic wave region may be classified into a near-field and a far-field. In the far-field, in order for the far-field assumption to hold, a phase difference between two different antennas may not exceed the threshold phase (e.g. $\pi/8$). Here, the far-field assumption may be the Fraunhofer approximation.

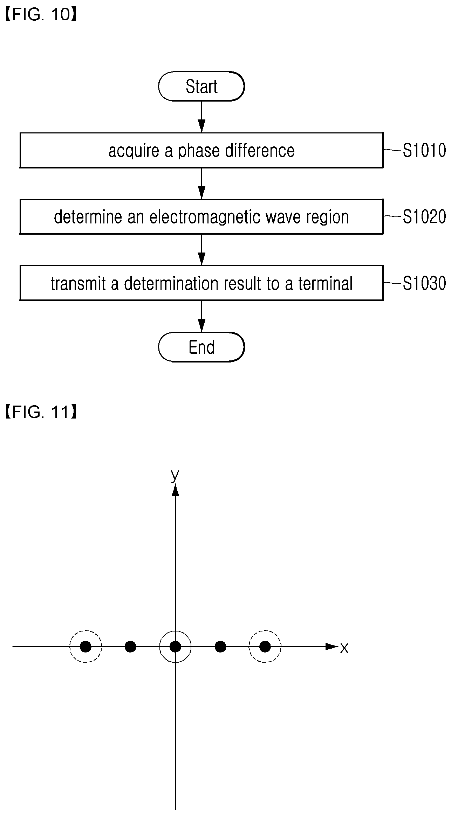

FIG. 10 is a flowchart illustrating a first exemplary embodiment of an electromagnetic wave region determination method in a wireless communication environment.

As shown in FIG. 10, the base station may acquire at least one phase difference occurring on at least two or more transmission paths between the base station and the terminal by using reference signals (S1010). In this case, there may be two methods of acquiring the phase difference. In a method for acquiring the phase difference (hereinafter referred to as 'phase difference acquisition method 1'), the base station may transmit reference signals capable of phase measurement (e.g. phase tracking reference signals (PT-RSs), sounding reference signals (SRSs), or new reference signals (RSs)) to the terminal through a central antenna and an antenna located at an edge. The terminal may receive two reference signals. Then, the terminal may measure phases of the two reference signals. The terminal may report the measured phases to the base station. The base station may receive the phases from the terminal and acquire the phase difference.

Meanwhile, in another method for acquiring the phase difference (hereinafter referred to as 'phase difference acquisition method 2'), the terminal may transmit a reference signal capable of phase measurement to the base station. Accordingly, the base station may receive the reference signal from the terminal through the central antenna and the antenna located at the edge. The base station may calculate a delay spread of the signal received at each of the central and the edge antenna. Then, the base station may convert the calculated delay spread values into the phase difference.

Meanwhile, the base station may determine an electromagnetic wave region using the acquired phase difference (S1020). In this case, when the acquired phase difference satisfies the far-field assumption (i.e. when the phase difference is less than or equal to the threshold phase (e.g. $\pi/8$), the base station may determine that the electromagnetic wave region is in the far-field. Conversely, when the acquired phase difference does not satisfy the far-field assumption (i.e. the phase difference exceeds the threshold phase (e.g. $\pi/8$)), the base station may determine that the electromagnetic wave region is in the near-field. Then, the base station may notify the terminal of the determination result (S1030). The terminal may receive the determination result from the base station.

FIG. 11 is a conceptual diagram illustrating a first exemplary embodiment of a uniform linear array (ULA) antenna.

As shown in FIG. 11, in the case of a ULA antenna, an edge antenna may be one of antennas positioned at the left end or the right end. Such an edge antenna may be indicated by a dashed-line circle. The central antenna may be indicated by a solid-line circle.

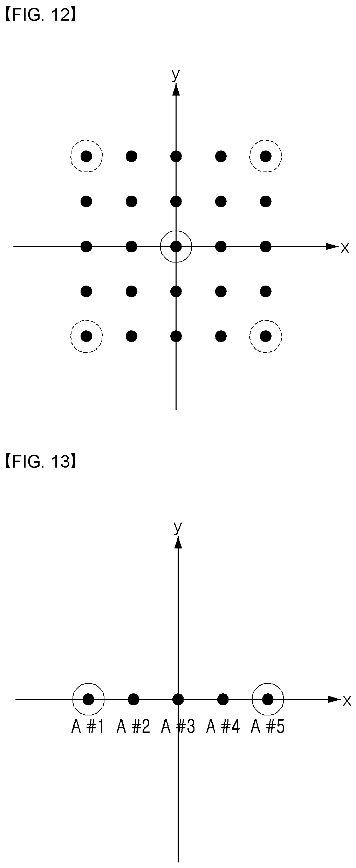

FIG. 12 is a conceptual diagram illustrating a first exemplary embodiment of a uniform planar array (UPA) antenna.

As shown in FIG. 12, in the case of a UPA antenna, an edge antenna may be one of antennas positioned at the top left, bottom left, top right, or bottom right. Such an edge antenna may be indicated by a dashed-line circle. The central antenna may be indicated by a solid-line circle.

Meanwhile, the base station may transmit reference signals using two antennas, the central antenna and the edge antenna. Alternatively, the base station may transmit reference signals using a greater number of antennas. For example, when using a UPA, the base station may transmit reference signals using the central antenna and the antenna located at the top left. In contrast, when using a UPA, the base station may transmit reference signals using all four antennas located at the edges along with the central antenna. Alternatively, the base station may transmit reference signals using all antennas. Accordingly, the terminal may receive the reference signals transmitted from the base station using the two antennas including the central antenna and the edge antenna. The terminal may measure the phases of the received reference signals. Alternatively, the terminal may receive reference signals transmitted from the base station using a large number of antennas. The terminal may measure the phases of the received reference signals.

For example, the terminal may receive reference signals transmitted from the base station using the central antenna and the antenna located at the top left of the UPA. The terminal may measure the phases of the received reference signals. Alternatively, the terminal may receive reference signals transmitted from the base station using all four antennas located at the edges of the UPA and the central antenna. The terminal may measure the phases of the received reference signals. Alternatively, the terminal may receive reference signals transmitted from the base station using all antennas. The terminal may measure the phases of the received reference signals. The terminal may transmit information on the measured phases to the base station.

Accordingly, the base station may receive the information on the measured phases from the terminal. Based on the phases, the base station may acquire phase differences. In this case, the base station may determine that the electromagnetic wave region is in the far-field when at least one of the acquired phase differences satisfies the far-field assumption (e.g. less than or equal to $\pi/8$). Conversely, the base station may determine that the electromagnetic wave region is in the near-field when at least one of the acquired phase differences does not satisfy the far-field assumption (e.g. greater than $\pi/8$). On the other hand, the base station may determine that the electromagnetic wave region is in the far-field when all the acquired phase differences satisfy the far-field assumption (e.g. less than or equal to $\pi/8$). Conversely, the base station may determine that the electromagnetic wave region is in the near-field when all the acquired phase differences do not satisfy the far-field assumption (e.g. greater than $\pi/8$).

Here, the terminal may acquire phase differences based on the measured phases. In this case, the terminal may determine that the electromagnetic wave region is in the far-field when at least one of the acquired phase differences satisfies the far-field assumption (e.g. less than or equal to $\pi/8$). Conversely, the terminal may determine that the electromagnetic wave region is in the near-field when at least one of the acquired phase differences does not satisfy the far-field assumption (e.g. greater than $\pi/8$). On the other hand, the terminal may determine that the electromagnetic wave region is in the far-field when all the acquired phase differences satisfy the far-field assumption (e.g. less than or equal to $\pi/8$). Conversely, the terminal may determine that the electromagnetic wave region is in the near-field when all the acquired phase differences do not satisfy the far-field assumption (e.g. greater than $\pi/8$). The terminal may notify the base station of the determination result of the electromagnetic wave region. Accordingly, the base station may receive the determination result of the electromagnetic wave region from the terminal.

On the other hand, the terminal may transmit a reference signal (e.g. sounding reference signal (SRS)) to the base station. Accordingly, the base station may receive the reference signal using two antennas, the central antenna and the edge antenna, based on information on a reference signal pattern and transmission occasions. Here, the reference signal pattern may be an RS pattern. Alternatively, the base station may receive the reference signal using a greater number of antennas. For example, when using a UPA, the base station may receive the reference signal through the central antenna and the antenna located at the top left. In contrast, when using a UPA, the base station may receive the reference signal through all four antennas located at the edges and the central antenna. Alternatively, the base station may receive the reference signal through all antennas. The base station may calculate a delay spread of the received reference signal. Furthermore, the base station may convert the calculated delay spread values into phase differences to acquire the phase differences.

In this case, the base station may determine that the electromagnetic wave region is in the far-field when at least one of the acquired phase differences satisfies the far-field assumption (e.g. less than or equal to $\pi/8$). Conversely, the base station may determine that the electromagnetic wave region is in the near-field when at least one of the acquired phase differences does not satisfy the far-field assumption (e.g. greater than $\pi/8$). Alternatively, the base station may determine that the electromagnetic wave region is in the far-field when all the acquired phase differences satisfy the far-field assumption (e.g. less than or equal to $\pi/8$). Conversely, the base station may determine that the electromagnetic wave region is in the near-field when all the acquired phase differences do not satisfy the far-field assumption (e.g. greater than $\pi/8$).

Meanwhile, Table 2 may represent information on the PT-RS or new RS/SRS transmitted by the base station and the antenna indexes for transmitting or receiving signals in the phase difference-based electromagnetic wave region determination method.

[Table 2]

| PT-RS or new RS/SRS information | RS pattern and transmission occasion information |
|---|---|
| Indexes of antennas for transmitting/receiving signals | A #1, A #5 |

In relation to Table 2, the base station may configure an RS density in the RS pattern of signal(s) to be transmitted/received based on the number of antennas available at the base station, latency requirement of the terminal, and the like. For example, the more antennas are available at the base station, the more antennas may be used to transmit/receive signal(s). In addition, the greater the latency requirement of the terminal, the longer the duration over which more signals may be transmitted/received. Therefore, the base station may determine a density of the PT-RS or new RS to be transmitted or the SRS to be received based on such considerations. Furthermore, when the base station intends to perform precise electromagnetic wave region determination, the base station may also transmit/receive more signals in consideration thereof. During the process of determining the RS pattern and transmission occasion information, the terminal may transmit required information such as the latency requirement of the terminal to the base station via uplink control information (UCI), Msg1, MsgA, terminal-assistance information, or other new radio resource control (RRC) signaling. Alternatively, the base station may request the necessary information from the terminal through a UE information request to configure the RS pattern and transmission occasions. Accordingly, the terminal may receive the UE information request. In response, the terminal may transmit the necessary information to the base station via a UE information response.

Once the RS pattern and transmission occasions of the signals to be transmitted/received are determined based on the above process, the base station may determine the antenna indexes for transmitting/receiving the corresponding signals.

FIG. 13 is a conceptual diagram illustrating a first exemplary embodiment of antenna indexes.

As shown in FIG. 13, when the base station considers a ULA composed of five antenna elements, the base station may transmit/receive signals through the leftmost antenna A#1 and the rightmost antenna A#5, both indicated by solid lines. In this manner, the base station may transmit/receive signals through two antennas (A#1 and A#5) located at the edges, which are theoretically expected to exhibit the largest phase difference. However, the base station may also select two antennas other than A#1 and A#5 to transmit/receive the signal.

In the electromagnetic wave region determination process, when the base station transmits the PT-RSs to the terminal, the base station may transmit the PT-RS based on a conventional scheme for determining a time/frequency transmission density of the PT-RSs according to a bandwidth (BW) and a modulation and coding scheme (MCS). Similarly, when the base station transmits new RSs to the terminal, the base station may determine a time/frequency transmission density of the new RSs in a manner similar to the PT-RS transmission scheme, and may transmit the new RS based thereon. Additionally, antenna indexes used for transmitting/receiving the signals in Table 2 may correspond to physical antenna elements or virtual logical antennas (i.e. antenna ports). The base station may transmit information on the RS pattern and transmission occasions or information on the antenna indexes in Table 2 to the terminal via a system information block (SIB), DCI, or other new RRC signaling.

Subsequently, the received antenna index information may be used later in the process to be described with reference to Table 3, in order for the terminal to identify that the received PT-RSs or new RSs have been transmitted through different physical antenna elements or virtual logical antennas. Alternatively, the received antenna index information may be used in the process to be described with reference to Table 4 when the terminal transmits an SRS based on the given RS pattern and transmission occasion information.

Table 3 may represent phase difference, electromagnetic wave region determination threshold, comparison results, and determination information.

[Table 3]

| Phase difference | $\varphi_1$ |
|---|---|
| Electromagnetic wave region determination threshold | $\theta_{phase}$ |
| Comparison result between the phase difference and the electromagnetic wave region determination threshold | $\varphi_1 > \theta_{phase}$ |
| Electromagnetic wave region determination information | Near-field |

As shown in Table 3, when the terminal performs electromagnetic wave region determination, the terminal may measure the phases of reference signals received from the base station. The terminal may report the measured phases to the base station. The base station may receive the information regarding the measured phases from the terminal. Based on the received information on the measured phases, the base station may determine whether a phase difference $\varphi_1$ between the reference signals transmitted through two antennas exceeds the electromagnetic wave region determination threshold $\theta_{phase}$. The base station may determine the electromagnetic wave region based on the determination result. In this case, the base station may determine that the electromagnetic wave region is in the near-field when the phase difference exceeds the phase-based electromagnetic wave region determination threshold. In Table 3, the base station may determine the electromagnetic wave region based on the difference between two measurements by transmitting two reference signals to the terminal. Alternatively, the base station may transmit n reference signals, where n is two or more. n may be a positive integer greater than 2 (i.e. $n \geq 2$). In such a case, the base station may calculate phase differences for $_nC_2$ combinations and determine the electromagnetic wave region based on the largest phase difference among the calculated values. Here, C may denote the number of combinations.

In addition, in Table 3, the electromagnetic wave region determination threshold may be set to the theoretical value of $\pi/8$, or may be configured as a different threshold value suitable for the current communication environment for the purpose of determining the electromagnetic wave region. Thereafter, the base station may transmit information regarding the electromagnetic wave region determination result to the terminal. In this case, the base station may define a new parameter and transmit the electromagnetic wave region determination result to the terminal via a DCI, MAC-CE, RRC reconfiguration message, or other new RRC signaling.

Accordingly, the terminal may receive the electromagnetic wave region determination result from the base station. Based on the electromagnetic wave region determination result received from the base station, the terminal may determine that a currently used reception beam is no longer valid for receiving signals from the base station. Accordingly, the terminal may reconfigure and use a reception beam suitable for the changed electromagnetic wave region.

In the above-described process, the base station may calculate a phase difference of the PT-RSs or the new RSs and determine the electromagnetic wave region based thereon. Alternatively, the terminal may calculate the phase difference and determine the electromagnetic wave region based thereon. In such a case, the base station may transmit two reference signals (PT-RSs or new RSs). Then, the terminal may calculate the phase difference of the two received signals and determine the electromagnetic wave region by comparing the phase difference with the electromagnetic wave region determination threshold.

In this case, the base station may define a required value serving as the electromagnetic wave region determination threshold as a new parameter (e.g. field distinction phase difference threshold) and notify the terminal via a SIB, DCI, or other new RRC signaling. The terminal may receive the electromagnetic wave region determination threshold from the base station

The terminal may transmit electromagnetic wave region determination information to the base station. To this end, the terminal may define a new parameter and transmit the electromagnetic wave region determination information to the base station via UCI. Alternatively, the base station may instruct, through a UE information request, the terminal to report the electromagnetic wave region determination information. The terminal may receive the instruction to report the electromagnetic wave region determination information from the base station. Accordingly, the terminal may transmit the electromagnetic wave region determination information to the base station. In addition, the base station may transmit information regarding the instruction to report the electromagnetic wave region determination information to the terminal via a SIB or new RRC signaling. Accordingly, the terminal may receive the instruction to report the electromagnetic wave region determination information via the SIB or new RRC signaling. The terminal may respond to the instruction by transmitting a measurement report, UE assistance information, or new RRC signaling to the base station.

Meanwhile, Table 4 may represent SRS delay spread, phase difference, comparison result, and determination information.

[Table 4]

| SRS delay spread | t |
|---|---|
| Phase difference | $\varphi_2$ |
| Comparison result between the phase difference and the electromagnetic wave region determination threshold | $\varphi_2 > \theta_{phase}$ |
| Electromagnetic wave region determination information | Near-field |

In Table 4, the base station may receive an SRS transmitted by the terminal based on a determined antenna index. The base station may calculate the phase difference based on the delay spread of the SRS and determine the electromagnetic wave region by comparing the calculated phase difference with $\theta_{phase}$. The base station may calculate the delay spread based on the propagation delay of the SRS and may calculate the phase difference within the antenna structure based on the delay spread using the equation $2\pi ft = \varphi_2$. Here, f may represent a frequency used for communication. In Table 4, when the base station receives three or more SRSs, the base station may determine the SRS delay spreads as the maximum of the propagation delay differences between two different SRSs. Table 4, similar to Table 3, may represent an example in which the phase difference is greater than the electromagnetic wave region determination threshold and thus the region is determined as a near-field. Thereafter, the base station may define a new parameter and transmit the electromagnetic wave region determination result to the terminal via a DCI, MAC-CE, RRC reconfiguration, or other new RRC signaling.

**Rayleigh distance-based electromagnetic wave region determination technique**

In the Rayleigh distance-based electromagnetic wave region determination technique, the base station or the terminal may use the Rayleigh distance as a metric for distinguishing between a near-field and a far-field. The base station or the terminal may compare the Rayleigh distance with a measured distance between the base station and the terminal. The base station or the terminal may determine that the electromagnetic wave region is in the far-field when the measured distance between the base station and the terminal is greater than the Rayleigh distance. In contrast, the base station or the terminal may determine that the electromagnetic wave region is in the near-field when the measured distance between the base station and the terminal is less than the Rayleigh distance.

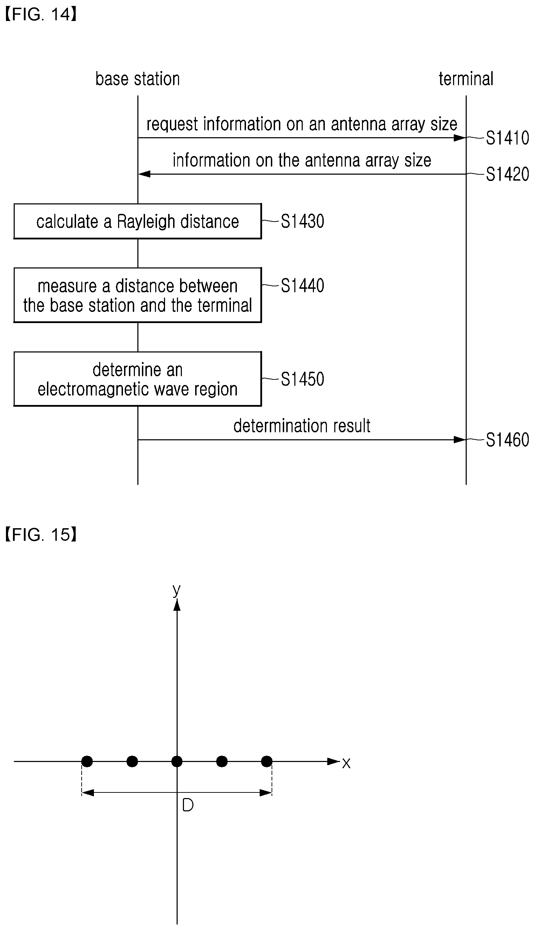

FIG. 14 is a flowchart illustrating a second exemplary embodiment of a method for determining an electromagnetic wave region in a wireless communication environment.

As shown in FIG. 14, the base station may request information on the antenna array size of the terminal in order to calculate a Rayleigh distance (S1410). Then, the terminal may receive the request for the information on the antenna array size from the base station. In response to the request, the terminal may transmit information on the antenna array size of the terminal to the base station (S1420). Accordingly, the base station may receive the information on the antenna array size of the terminal from the terminal. The base station may calculate the Rayleigh distance R using Equation 3 based on an antenna array size $D_1$ of the base station, the antenna array size $D_2$ of the terminal, and a frequency f used for communication (S1430).

[Equation 3]

$$R = 2(D_1 + D_2)^2/\lambda$$

Table 5 shows the antenna array sizes, frequency used for communication, and Rayleigh distance.

[Table 5]

| Antenna array size of the base station | $D_1$ |
|---|---|

(continued)

| Antenna array size of the terminal | $D_2$ |
|---|---|
| Frequency used for communication | $f = c/\lambda$ |
| Rayleigh distance | $2(D_1 + D_2)^2/\lambda$ |

Alternatively, the base station may transmit the information on the antenna array size of the base station and the frequency used for communication to the terminal. Then, the terminal may receive the information on the antenna array size of the base station and the information on the frequency used for communication from the base station. The terminal may also calculate the Rayleigh distance based on the antenna array size of the base station, the antenna array size of the terminal, and the frequency used for communication. In this case, the wavelength λ may be a value obtained by dividing the speed of electromagnetic waves $c = 3 \times 10^8$ m/s by the frequency $f$ used for communication. Additionally, the antenna array size may refer to the length of the axis with the largest value in a given antenna array.

FIG. 15 is a conceptual diagram illustrating a first exemplary embodiment of an antenna size of a ULA.

As shown in FIG. 15, the antenna size of the ULA may be $D$.

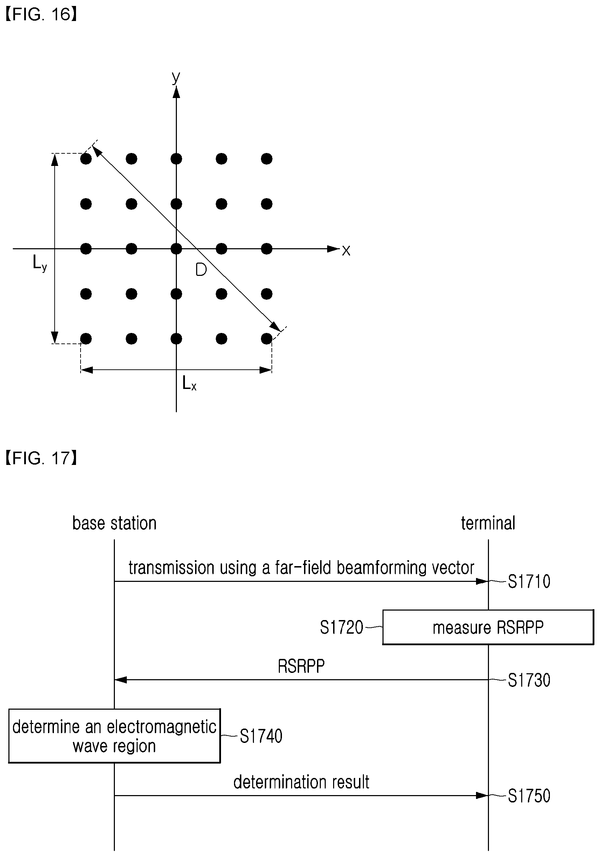

FIG. 16 is a conceptual diagram illustrating a first exemplary embodiment of an antenna size of a UPA.

As shown in FIG. 16, the antenna size of the UPA may be $D$.

Additionally, in the case of a UPA, when the x-axis length of the antenna array is $L_x$ and the y-axis length is $L_y$, the antenna array size $D$ may be given by Equation 4 below.

[Equation 4]

$$D = \sqrt{L_x{}^2 + L_y{}^2}$$

When the base station calculates the Rayleigh distance, the terminal may transmit the information on the antenna array size of the terminal to the base station via a UCI. Alternatively, the base station may request transmission of the information on the antenna array size of the terminal through a UE information request. Then, the terminal may receive the UE information request from the base station and transmit the information on the antenna array size of the terminal to the base station in response. In this case, the terminal may transmit the information on the antenna array size of the terminal to the base station through a UE information response. Additionally, the base station may transmit an instruction to report the information on the antenna array size of the terminal via a SIB or new RRC signaling. The terminal may define a measurement report, UE assistance information, or new RRC signaling for responding to the reporting instruction. Thereafter, the base station may calculate the Rayleigh distance based on the antenna array size of the terminal, the antenna array size of the base station, and the frequency used for communication with the terminal.

The above procedure may be a procedure for calculating the Rayleigh distance at the base station in order to perform electromagnetic wave region determination at the base station. Alternatively, the base station may transmit the information on the antenna array size of the base station and the frequency used for communication to the terminal via a DCI, MAC-CE, RRC signaling, or other new signaling. Then, the terminal may receive the information on the antenna array size of the base station and the frequency used for communication from the base station. The terminal may calculate the Rayleigh distance based on the antenna array size of the base station, the antenna array size of the terminal, and the frequency used for communication.

Referring again to FIG. 14, the base station may measure the distance between the base station and the terminal (S1440). The base station may measure the distance between the base station and the terminal through a propagation delay of a physical random access channel (PRACH) preamble, a positioning reference signal (PRS), a sounding reference signal (SRS), or a reference signal used for timing-based positioning such as PRS and SRS. Additionally, the base station may measure the distance between the base station and the terminal through other physical channels/signals used for setting a timing advance (TA). Furthermore, the base station may transmit information on the measured distance $d$ indicating the distance between the base station and the terminal to the terminal via a DCI, MAC-CE, RRC signaling, or other new signaling so that the terminal calculates the Rayleigh distance.

Meanwhile, the base station may determine the electromagnetic wave region by comparing the calculated Rayleigh distance with the measured distance between the base station and the terminal (S1450). In this case, the base station may determine that the region is in the near-field when the Rayleigh distance is greater than the measured distance between the base station and the terminal, as shown in Table 6. In contrast, the base station may determine that the region is in the far-field when the Rayleigh distance is smaller than the measured distance between the base station and the terminal. Alternatively, the terminal may determine the electromagnetic wave region by comparing the Rayleigh distance with the measured distance between the base station and the terminal. In this case, the terminal may determine that the region is in the near-field when the Rayleigh distance is greater than the measured distance between the base station and the terminal. In contrast, the terminal may determine that the region is in the far-field when the Rayleigh distance is smaller than the measured distance between the base station and the terminal. Table 6 may illustrate comparison and determination information between the Rayleigh distance and the measured distance between the base station and the terminal.

[Table 6]

| Comparison result between the Rayleigh distance and the measured distance between the base station and the terminal | $d < (D_1 + D_2)^2/\lambda$ |
|---|---|
| Electromagnetic wave region determination information | Near-field |

On the other hand, when the electromagnetic wave region determination process is performed at the base station, the base station may transmit electromagnetic wave region determination information to the terminal (S1460). To this end, the base station may define a new parameter and transmit the information to the terminal via a DCI, MAC-CE, RRC reconfiguration, or other new RRC signaling. Alternatively, when the electromagnetic wave region determination process is performed at the terminal, the terminal may transmit electromagnetic wave region determination information to the base station. To this end, the terminal may define a new parameter and transmit the electromagnetic wave region determination information to the base station via a UCI. Alternatively, the base station may instruct the terminal to report the electromagnetic wave region determination information through a UE information request. Then, the terminal may receive the reporting instruction of the electromagnetic wave region determination information from the base station. Accordingly, the terminal may transmit the electromagnetic wave region determination information to the base station. Additionally, the base station may transmit information related to the reporting instruction of the electromagnetic wave region determination information to the terminal via a SIB or new RRC signaling. Accordingly, the terminal may receive the reporting instruction of the electromagnetic wave region determination information via the SIB or new RRC signaling. The terminal may transmit a response to the reporting instruction to the base station using a measurement report, UE assistance information, or new RRC signaling.

## RSRPP-based electromagnetic wave region determination technique

In the RSRPP-based electromagnetic wave region determination technique, a base station may transmit a beam using a far-field beamforming vector that has been used in far-field communication. The base station may determine whether the region is in the near-field or far-field based accordingly on a reception power at the terminal. In this technique, the base station may distinguish the electromagnetic wave region based on RSRPP, that is, path-specific RSRP, rather than an average value. In this case, the base station may determine the electromagnetic wave region using two schemes.

FIG. 17 is a flowchart illustrating a third exemplary embodiment of a method for determining an electromagnetic wave region in a wireless communication environment.

As shown in FIG. 17, the base station may transmit a beam to the terminal using a far-field beamforming vector that has been used in far-field communication (S1710). In this case, the base station may know a measured location of the terminal based on previous measurement results of the terminal. Accordingly, the base station may form the beam to the terminal by using the corresponding far-field beamforming vector in accordance with the location of the terminal. Then, the terminal may receive the beam. The terminal may measure an RSRPP (S1720). The terminal may report the measured RSRPP to the base station (S1730). Then, the base station may receive the measured RSRPP from the terminal. In this case, the base station may define a value serving as a threshold for determining the electromagnetic wave region as a new parameter (e.g. field distinction RSRPP threshold $\theta_{RSRPP}$).

The base station may determine the electromagnetic wave region by comparing the measured RSRPP value with the field distinction RSRPP threshold (S1740). In this case, the base station may determine that the region is in the far-field when the measured RSRPP value exceeds the field distinction RSRPP threshold. In contrast, the base station may determine that the region is in the near-field when the measured RSRPP value does not exceed the field distinction RSRPP threshold. The base station may notify the terminal of the determination result (S1750). Then, the terminal may receive the determination result from the base station and adjust the reception beam accordingly.

Meanwhile, the base station may transmit beams in different directions using far-field beamforming vectors through beam sweeping. In the case of the far-field, the RSRPP may have a peak value when the beam is formed in a direction appropriate to the location of the terminal. In contrast, in the case of the near-field, the RSRPP may not show a peak at a specific angle and may instead show relatively low and RSRPP values across a wide range of angles. Therefore, new parameters (e.g. field distinction RSRPP power threshold and field distinction RSRPP range threshold) may be defined to serve as criteria for identifying a range in which similar values are obtained with low RSRPP.

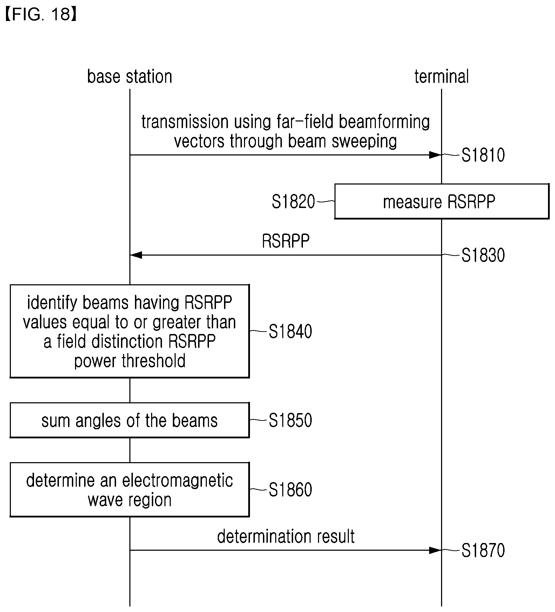

In this case, if the angular range of the RSRPP values exceeding the field distinction RSRPP threshold exceeds the field distinction RSRPP range threshold, the region may be determined to be in the near-field. In contrast, if the angular range of the RSRPP values exceeding the field distinction RSRPP threshold does not exceed the field distinction RSRPP range threshold, the region may be determined to be in the far-field. As a result, when the base station knows the location of the terminal based on previous measurements, the base station may select one of two schemes for determining the electromagnetic wave region: a scheme in which a single beam is transmitted to measure RSRPP (see FIG. 17), and a scheme in which multiple beams are transmitted through beam sweeping to measure RSRPP (see FIG. 18). Alternatively, when the base station knows the location of the terminal based on previous measurements, the base station may use both the scheme of FIG. 17 and the scheme of FIG. 18 to determine the electromagnetic wave region. When the base station does not know the location of the terminal, the base station may determine the electromagnetic wave region using the scheme of FIG. 18.

When the base station performs electromagnetic wave region determination by comprehensively considering both schemes, the base station may finally determine that the region is in the near-field when both schemes determine that the region is in the near-field. Alternatively, when the base station performs electromagnetic wave region determination by comprehensively considering both schemes, the base station may flexibly set the threshold(s) and determine that the electromagnetic wave region is in the far-field when both schemes determine the region to be in the far-field. Table 7 may illustrate new parameters required to perform the RSRPP-based electromagnetic wave region determination technique based on FIG. 17 and the RSRPP-based electromagnetic wave region determination technique based on FIG. 18.

[Table 7]

| Field distinction RSRPP threshold | $\theta_{RSRPP}$ |
|---|---|
| Field distinction RSRPP power threshold | $\theta_{RSRPP\_power}$ |
| Field distinction RSRPP range threshold | $\theta_{RSRPP\_range}$ |

The base station may transmit a beam to the terminal using a far-field beamforming vector according to the location of the terminal. The base station may determine an electromagnetic wave region based on the RSRPP measurement value of the corresponding beam in accordance with FIG. 17. When the base station performs the RSRPP-based electromagnetic wave region determination technique in this manner, the base station may use the field distinction RSRPP threshold of Table 7. Meanwhile, the base station may transmit beams to the terminal using far-field beamforming vectors based on beam sweeping. Then, the terminal may measure RSRPPs for a plurality of far-field beamforming vectors and transmit the measurement results to the base station. In this case, the base station may determine an electromagnetic wave region based on RSRPP measurement values for the plurality of beamforming vectors as in FIG. 18. In such a case, the base station may use the field distinction RSRPP power threshold and the field distinction RSRPP range threshold of Table 7.

When performing the RSRPP-based electromagnetic wave region determination, the base station may use a synchronization signal block (SSB) or a channel state information reference signal (CSI-RS) as a reference signal. When determining an electromagnetic wave region based on RSRPP for CSI-RS, the base station may transmit an SSB in advance for reference to estimate the RSRPP measurement value when CSI-RS is transmitted, and may set each threshold based thereon.

Alternatively, the reference signal transmitted by the base station may be the SSB. In this case, the base station may estimate a rough RSRPP measurement value based on a prior OTA test or previously-obtained information through communication with another terminal at a previous time, and may set each threshold based thereon. Additionally, the terminal may perform electromagnetic wave region determination. In such a case, the base station may transmit the field distinction RSRPP threshold, the field distinction RSRPP power threshold, and the field distinction RSRPP range threshold to the terminal via a SIB, DCI, MAC-CE, RRC signaling, or other new signaling.

Meanwhile, Table 8 may illustrate far-field beamforming vectors that may be used by the base station through beam sweeping.

[Table 8]

| Far-field beamforming vector | RSRPP |
|---|---|
| Beam #1 | RSRPP_35 |
| Beam #2 | RSRPP_62 |
| Beam #3 | RSRPP_69 |

(continued)

| Far-field beamforming vector | RSRPP |
|---|---|
| Beam #4 | RSRPP_65 |
| Beam #5 | RSRPP_44 |

In Table 8, the base station may form five beams through beam sweeping. In this case, a beam corresponding to the location of the terminal may be the beam #3. When the base station accurately knows the location of the terminal, the base station may use the scheme of FIG. 17. In this case, the base station may transmit the beam #3 to the terminal.

FIG. 18 is a flowchart illustrating a fourth exemplary embodiment of a method for determining an electromagnetic wave region in a wireless communication environment.

As shown in FIG. 18, the base station may transmit SSBs or CSI-RSs toward the terminal using far-field beamforming vectors based on beam sweeping, when the base station does not accurately know the location of the terminal or even when the base station knows the location of the terminal (S1810). In this case, referring to Table 8, the base station may transmit five beams corresponding to the beam #1 to beam #5 to the terminal. Thereafter, the terminal may measure RSRPPs for the reference signals (SSB or CSI-RS) of the received beams (S1820). The terminal may transmit the measured RSRPPs to the base station (S1830). Accordingly, the base station may receive the RSRPPs from the terminal.

Thereafter, the base station may identify beams having RSRPP values equal to or greater than the field distinction RSRPP power threshold based on the RSRPP measurement values of the beams #1 to #5 received from the terminal (S1840). In this case, when the field distinction RSRPP power threshold is set to 60, the beams #2, #3, and #4 may correspond thereto. Angles corresponding to the beams may be expressed as $\varphi 2$, $\varphi 3$, and $\varphi 4$, respectively. Accordingly, the base station may sum the angles (e.g. $\varphi 2$, $\varphi 3$, and $\varphi 4$) corresponding to the respective beams (S1850).

Thereafter, the base station may determine the electromagnetic wave region based on the summed angle (S1860). For example, the base station may determine that the region is in the near-field when the summed angle is greater than the field distinction RSRPP range threshold. In contrast, the base station may determine that the region is in the far-field when the summed angle is not greater than the field distinction RSRPP range threshold. The base station may notify the terminal of the determination result (S1870). Then, the terminal may receive the determination result from the base station. In this case, the base station may define a new parameter and transmit the electromagnetic wave region determination information to the terminal via a DCI, MAC-CE, RRC reconfiguration, or other new RRC signaling.

The above process describes the process of performing electromagnetic wave region determination at the base station, but it may also be possible for the terminal to determine the electromagnetic wave region. The terminal may perform electromagnetic wave region determination based on the parameters received from the base station and the RSRPP measurement values of the respective beams. The terminal may notify the base station of the determination result. To this end, the terminal may define a new parameter and transmit it in addition to a CSI report or transmit it to the base station via UCI. Alternatively, the base station may transmit information regarding a reporting instruction of electromagnetic wave region determination information to the terminal through a UE information request. The terminal may receive the information and transmit the electromagnetic wave region determination information to the base station through a UE information response. Additionally, the base station may transmit information regarding the reporting instruction of electromagnetic wave region determination information to the terminal via a SIB or new RRC signaling. The terminal may respond to the reporting instruction using a measurement report, UE assistance information, or by defining new RRC signaling.

In the present disclosure, the electromagnetic wave region determination procedure using RSRPP may be described in terms of a process in which the base station transmits a far-field beamforming vector to the terminal. However, the same scheme may be applicable even when the terminal transmits a far-field beamforming vector to the base station. Furthermore, although the present disclosure describes the process for determining an electromagnetic wave region based on RSRPP, the same scheme may also be applicable when determining the electromagnetic wave region based on RSRP. A simple combination, partial combination, or extended combination of two or more of the above-described schemes may be applied.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a base station, comprising:

   receiving at least one phase difference occurring on at least two transmission paths between the base station and a user equipment (UE);
   determining whether the at least one phase difference satisfies a far-field assumption; and
   determining an electromagnetic wave region based on whether the far-field assumption is satisfied.

2. The method according to claim 1, wherein the receiving of the at least one phase difference occurring on the at least two transmission paths comprises:

   transmitting at least two reference signals to the UE;
   receiving at least two phases measured for the at least two reference signals from the UE; and
   receiving the at least one phase difference based on the at least two phases.

3. The method according to claim 2, wherein the at least two reference signals are at least two reference signals capable of phase measurement.

4. The method according to claim 2, wherein the at least two reference signals are transmitted using a center antenna and at least one edge antenna of the base station.

5. The method according to claim 1, wherein the far-field assumption is a condition in which the at least one phase difference is equal to or less than a threshold phase, and the determining of the electromagnetic wave region based on whether the far-field assumption is satisfied comprises:

   in response to the at least one phase difference being equal to or less than the threshold phase, determining that the electromagnetic wave region is in a far-field; and
   in response to the at least one phase difference being greater than the threshold phase, determining that the electromagnetic wave region is in a near-field.

6. The method according to claim 1, wherein the receiving of the at least one phase difference occurring on the at least two transmission paths comprises:

   receiving a reference signal from the terminal using at least two antennas;
   calculating a delay spread for the reference signal received using each of the at least two antennas; and
   converting the calculated delay spreads into corresponding phase difference(s) to receive the at least one phase difference.

7. The method according to claim 1, further comprising: transmitting a result of determining the electromagnetic wave region to the terminal.

8. A method of a user equipment (UE), comprising:

   receiving at least two reference signals from a base station;
   measuring at least two phases for the at least two reference signals; and
   transmitting the measured at least two phases to the base station,
   wherein the measured at least two phases are used to determine whether the UE is located in a near-field or a far-field.

9. The method according to claim 8, wherein the at least two reference signals are at least two reference signals capable of phase measurement.

10. The method according to claim 8, further comprising:

    receiving a determination result for an electromagnetic wave region from the base station; and
    adjusting a reception beam according to the determination result,
    wherein the determination result indicates whether the electromagnetic wave region is in the near-field or the far-field.

11. A user equipment (UE) comprising a processor, wherein the processor causes the UE to perform:

    receiving at least two reference signals from a base station;
    measuring at least two phases for the at least two reference signals; and
    transmitting the measured at least two phases to the base station,
    wherein the measured at least two phases are used to determine whether the UE is located in a near-field or a far-field.

12. The UE according to claim 11, wherein the at least two reference signals are at least two reference signals capable of phase measurement.

13. The UE according to claim 11, wherein the processor further causes the UE to perform:

    receiving a determination result for an electromagnetic wave region from the base station; and
    adjusting a reception beam according to the determination result,
    wherein the determination result indicates whether the electromagnetic wave region is in the near-field or the far-field.

【FIG. 1】

【FIG. 2】

200

220

210

memory

ROM RAM

processor

270

input interface device 240

output interface device 250

storage device 260

transceiver 230

【FIG. 3】

【FIG. 4a】

【FIG. 4b】

【FIG. 5】

【FIG. 6】

subframe (1ms)

| slot #0 | slot #1 | ··· | slot #n |

【FIG. 7】

slot

| #0 | #1 | #2 | #3 | #4 | #5 | #6 | #7 | #8 | #9 | #10 | #11 | #12 | #13 |

OFDM symbol

【FIG.8】

REG

N subcarriers

RE

N OFDM symbols

【FIG. 9】

【FIG. 10】

【FIG. 11】

【FIG. 12】

【FIG. 13】

【FIG. 14】

base station — terminal

request information on an antenna array size — S1410

information on the antenna array size — S1420

calculate a Rayleigh distance — S1430

measure a distance between the base station and the terminal — S1440

determine an electromagnetic wave region — S1450

determination result — S1460

【FIG. 15】

【FIG. 16】

【FIG. 17】

【FIG. 18】

base station                                                    terminal

transmission using far-field beamforming
vectors through beam sweeping
                                                          ─S1810

S1820─| measure RSRPP |

RSRPP
                                                          ─S1830

| identify beams having RSRPP
values equal to or greater than
a field distinction RSRPP
power threshold | ─S1840

| sum angles of the beams | ─S1850

| determine an electromagnetic
wave region | ─S1860

determination result
                                                          ─S1870

**EP 4 633 227 A1**

## INTERNATIONAL SEARCH REPORT

| International application No. |
|---|
| **PCT/KR2024/002131** |

### A. CLASSIFICATION OF SUBJECT MATTER

**H04W 24/08**(2009.01)i; **H04L 5/00**(2006.01)i

According to International Patent Classification (IPC) or to both national classification and IPC

### B. FIELDS SEARCHED

Minimum documentation searched (classification system followed by classification symbols)

H04W 24/08(2009.01); H04B 17/10(2015.01); H04B 17/16(2015.01); H04L 27/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위상 차이(phase difference), 니어 필드(near field), 파 필드(far field), 기지국(base station), 레일리 거리(Rayleigh distance), 기준신호(reference signal)

### C. DOCUMENTS CONSIDERED TO BE RELEVANT

| Category* | Citation of document, with indication, where appropriate, of the relevant passages | Relevant to claim No. |
|---|---|---|
| Y | CAO, Ruoxiao et al. Belief Propagation for Near-Field Cooperative Localization and Tracking in 6G Vehicular Networks. 2022 IEEE International Mediterranean Conference on Communications and Networking (MeditCom). 08 September 2022. See pages 161-162. | 1-13 |
| Y | CUI, Mingyao et al. Near-Field Communications for 6G: Fundamentals, Challenges, Potentials, and Future Directions. arXiv:2203.16318v6. September 2022. [Retrieved on 20 May 2024]. Retrieved from <URL: https://arxiv.org/abs/2203.16318v6>. See page 2. | 1-13 |
| A | WEI, Xiuhong et al. Channel Estimation for Extremely Large-Scale Massive MIMO: Far-Field, Near-Field, or Hybrid-Field?. arXiv:2109.07883v3. November 2021. [Retrieved on 20 May 2024]. Retrieved from <URL: https://arxiv.org/abs/2109.07883v3>. See pages 1-5. | 1-13 |
| A | US 2017-0279544 A1 (ANRITSU CORPORATION) 28 September 2017 (2017-09-28) See paragraphs [0069]-[0078]; and figure 3. | 1-13 |

☑ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 May 2024** | **31 May 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/002131**

### C. DOCUMENTS CONSIDERED TO BE RELEVANT

| Category* | Citation of document, with indication, where appropriate, of the relevant passages | Relevant to claim No. |
|---|---|---|
| A | WO 2022-088213 A1 (PURPLE MOUNTAIN LABORATORIES) 05 May 2022 (2022-05-05)<br>See claims 1-10. | 1-13 |

Form PCT/ISA/210 (second sheet) (July 2022)

**INTERNATIONAL SEARCH REPORT**
Information on patent family members

| International application No. |
| --- |
| **PCT/KR2024/002131** |

| Patent document cited in search report | | | Publication date (day/month/year) | Patent family member(s) | | | Publication date (day/month/year) |
| --- | --- | --- | --- | --- | --- | --- | --- |
| US | 2017-0279544 | A1 | 28 September 2017 | JP | 2017-181070 | A | 05 October 2017 |
| | | | | JP | 6494551 | B2 | 03 April 2019 |
| | | | | US | 9998240 | B2 | 12 June 2018 |
| WO | 2022-088213 | A1 | 05 May 2022 | CN | 112073350 | A | 11 December 2020 |
| | | | | CN | 112073350 | B | 02 March 2021 |
| | | | | US | 2023-0396471 | A1 | 07 December 2023 |

Form PCT/ISA/210 (patent family annex) (July 2022)